# EUROPEAN PATENT SPECIFICATION

(11) **EP 3 115 767 B1**
(45) Date of publication and mention of the grant of the patent: **24.06.2020**
(21) Application number: 15175493.4
(22) Date of filing: 06.07.2015
(51) Int. Cl.: G01N 3/32, G01M 17/013

(54) **METHOD FOR THE MECHANICAL CHARACTERIZATION OF A METALLIC MATERIAL FOR WHEEL DISK PRODUCTION**
VERFAHREN ZUR MECHANISCHEN CHARAKTERISIERUNG EINES METALLISCHEN MATERIALS ZUR RADSCHEIBENHERSTELLUNG
PROCÉDÉ POUR LA CARACTÉRISATION MÉCANIQUE D'UN MATÉRIAU MÉTALLIQUE POUR LA PRODUCTION D'UN DISQUE DE ROUE

(43) Date of publication of application: 11.01.2017
(73) Proprietor: MW Italia S.r.l., 10098 Rivoli (TO) (IT); ThyssenKrupp Steel Europe AG, 47166 Duisburg (DE)
(72) Inventor: PERRIS MAGNETTO, Gabriele, I-10098 RIVOLI (Torino) (IT); GOTTA, Giacomo, I-10080 LOCANA (Torino) (IT); ROVARINO, Davide Fabio, I-10071 BORGARO TORINESE (Torino) (IT); PIERONEK, David, 44329 DORTMUND (DE); TLAUKA, Patrick, 46117 OBERHAUSEN (DE)
(74) Representative: Vanzini, Christian

(56) References cited:
- US-A- 3 961 525
- US-A- 4 998 440
- US-A1- 2007 113 671
- US-A1- 2010 024 565
- US-A1- 2010 263 453
- US-A1- 2011 214 509
- US-A1- 2014 352 418

## Description

The present invention relates to the field of vehicle wheel manufacturing; more precisely, it relates to manufacturing of wheels of the type comprising a shaped rim of metallic material and a disk produced as a single sheet-metal piece by cold forming and die-cutting, and connected to the rim.

In particular, the present invention concerns methods for the mechanical characterization of metallic materials for wheel disk production. Such methods are implemented for pre-evaluating the suitability of new materials for wheel disks.

The determination of mechanical properties of metallic materials is one of the key processes of material suppliers. It is known that extensive examinations are necessary to characterize steels and other metallic materials. However, the results gained in these tests on flat specimens are often not sufficient to evaluate the potential of materials in final components. Production-related influences on the material properties are generally not regarded. In addition, the complex component loading situation is often not properly determined by standard flat specimen testing or directly transferable.

Main influencing factors in disk manufacturing processes are forming and cutting. Residual strains resulting from forming processes and quality of cutting edges are mostly not regarded, when materials are characterised for these purposes. This is an important drawback when the development of new materials for wheel disks is envisaged.

US 2007/0113671 A discloses a method of crack growth testing for thin samples. US 2010/0263453 A1 discloses a method for simulating stress experienced by a rotor blade and rotor disc fixture.

One object of the present invention is to provide a method for the mechanical characterization of a metallic material for wheel disk production, wherein more careful consideration can be taken about the production history of the real components under a realistic loading situation.

This object is achieved according to the invention by a method for the mechanical characterization of a metallic material for wheel disk production, comprising
- providing a specimen consisting of a strip of metal sheet and comprising two end portions and an intermediate portion interconnecting the end portions, wherein the intermediate portion has a curved shape, and
- subjecting the specimen to a mechanical fatigue test, wherein one of the end portions is clamped to a load applying part of a test apparatus, and the other end portion is clamped by another load applying part or fixed to a support part of the test apparatus,
wherein the intermediate portion of the specimen comprises a pair of flat or slightly curved flank segments inclined with respect to the end portions of the specimen, an intermediate bend interconnecting the flank segments, as well as a pair of end bends, each connecting the respective flank segment to the respective end portion of the specimen,
wherein the intermediate portion simulates, or is constituted by, a radial profile extract of a radially outer disk portion of a wheel disk.

The above object is also achieved by a method for the mechanical characterization of a metallic material for wheel disk production, comprising
- providing a specimen consisting of a strip of metal sheet and comprising two end portions and an intermediate portion interconnecting the end portions, wherein the intermediate portion has a curved shape, and
- subjecting the specimen to a mechanical fatigue test, wherein one of the end portions is clamped to a load applying part of a test apparatus, and the other end portion is clamped to another load applying part or fixed to a support part of the test apparatus,
wherein the intermediate portion of the specimen comprises a pair of flat or slightly curved flank segments, one of which is inclined with respect to the end portion adjoining thereto, the other being approximately aligned with the end portion adjoining thereto, and an intermediate bend interconnecting the flank segments, as well as an end bend connecting the inclined flank segment to the respective end portion of the specimen,
wherein the intermediate portion simulates, or is constituted by, a radial profile extract of a radially outer disk portion of a wheel disk.

The inventors realized that the results obtained with fatigue tests performed on specimens according to the invention approximate more closely rotatory bending test results on finished wheels, when compared to the conventional fatigue tests performed on flat specimens.

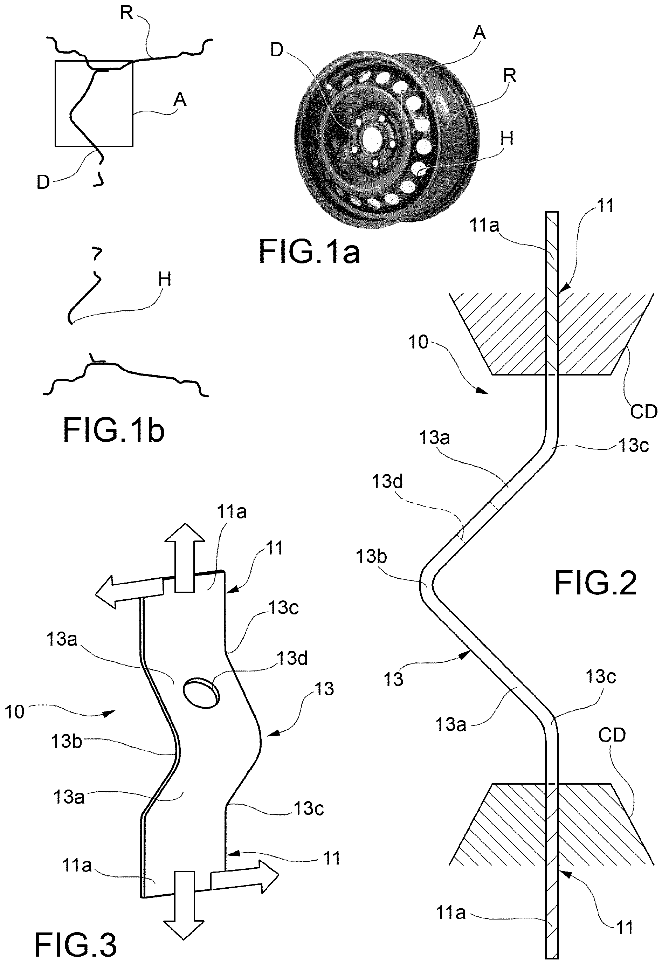

As a matter of fact, the profile of the specimen according to the invention is similar to that of common car wheel disks in the region of a radially outer disk portion A provided with vent holes H (see Figures 1a and 1b; for reference purposes, the rim is designated with R and the disk is designated with D). It has been experimented that most of the failures occurs on the radially outer disk portion A of the wheel disk.

Preferred embodiments of the invention are defined in the dependent claims, which are to be understood as forming an integral part of the present description.

Further characteristic features and advantages of the method and specimen according to the invention will become clear from the following detailed description of an embodiment of the invention provided with reference to the accompanying drawings and provided purely by way of a non-limiting example in which:
- Figures 1a and 1b are a perspective view and a cross-sectioned view of a typical car wheel,
- Figures 2 and 3 are a side elevation view and a perspective view of an exemplary specimen according to the invention,
- Figure 4a-c are bar charts reporting the results of fatigue tests performed on different specimens,
- Figures 5a and 5b are a perspective view and a cross-sectioned view of a typical commercial vehicle wheel, and
- Figure 6 is a side elevation view of another exemplary specimen according to the invention.

With reference to Figures 2 and 3, a specimen for the mechanical characterization of a metallic material for wheel disk production is designated with 10. The specimen 10 consists of a strip of metal sheet, and comprises opposite flat end portions 11 and an intermediate portion 13 interconnecting the end portions 11. The intermediate portion 13 has a curved shape to simulate a radial profile extract of a radially outer disk portion A of a wheel disk.

Each flat end portion 11 comprises a clamping region 11a, which is shown as a hatched region in Figure 2. The clamping regions 11a are adapted to be held by respective clamping devices CD of a conventional test machine. The test machine is adapted to apply a cyclic load (e.g. Deflection, Rotation, Force, Moment of Force) to the end portions 11 of the specimen 10, said load being directed in a direction parallel to the longitudinal direction of the specimen 10 (vertical arrows in Figure 3) but also lateral loads are possible (horizontal arrows in Figure 3).

The intermediate portion 13 of the specimen 10 comprises a pair of flat or slightly curved flank segments 13a inclined with respect to the end portions 11 of the specimen 10, and an intermediate bend 13b interconnecting the flank segments 13a. The intermediate portion 13 further comprises a pair of end bends 13c, each connecting the respective flank segment 13a to the respective end portion 11 of the specimen 10. Within the purpose of the present invention, the expression "slightly curved" is to be construed to mean that the flank segments 13a may have a curvature, which is however smaller, particularly far smaller than the curvature of the bends 13b and 13c.

Preferably, a hole 13d is formed through one of the flank segments 13a. The purpose of this hole is to simulate the influence of vent holes of wheel disks on fatigue tests.

Additionally, the influence of different cut methods or edge quality on fatigue performance can also be investigated via trimming of the specimen edges or the hole.

Furthermore, the specimen according to the invention can include joints or seams, e.g. for testing of tailor welded blank materials, etc..

The specimen 10 is produced from a flat strip of metal sheet, by subjecting the strip to a forming operation (such as, for example, bending, stamping, hot forming, flow forming, and so on). For experimental purposes, the inventors have produced specimens from flat strips of thick metal sheet. These specimens were manufactured through bending operations and the holes were obtained through die-cutting and coining operations.

The testing parameters were the following:
- Cyclic loading; (R = -1)

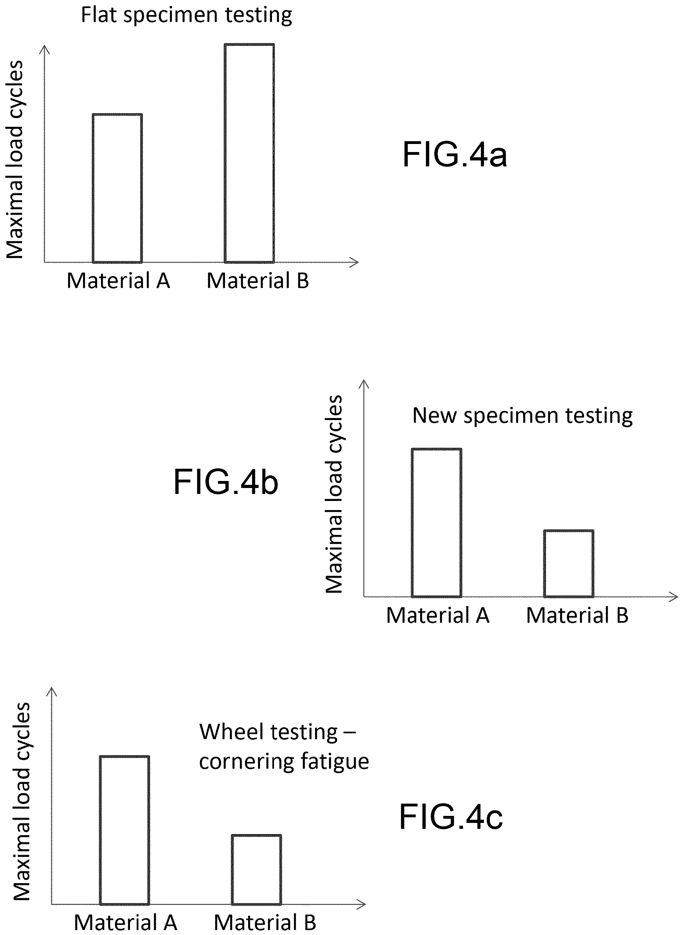

The force and deflection amplitude was measured in the longitudinal direction of the specimens. Specimens of different AHSS materials (material A and material B), were compared, and their fatigue resistance with respect to the maximum number of load cycles are plotted in Figures 4a-c. Testing is not limited to steel, also aluminum and magnesium or composite material is possible.

Based on these tests according to the invention, specimens of material A showed significantly higher fatigue resistance compared to material B (Fig. 4b). This result is remarkably similar to what observed for rotatory bending tests performed on finished wheels of these materials (Fig. 4c). On the contrary, Woehler tests performed on conventional flat specimens gave inverted results, i.e. showing that material B has higher fatigue resistance than material A (Fig. 4a).

Alternatively, the specimen according to the invention can be produced by cutting a metal strip out from a wheel disk. In this case the intermediate portion of the specimen would be a real radial profile extract of the wheel disk.

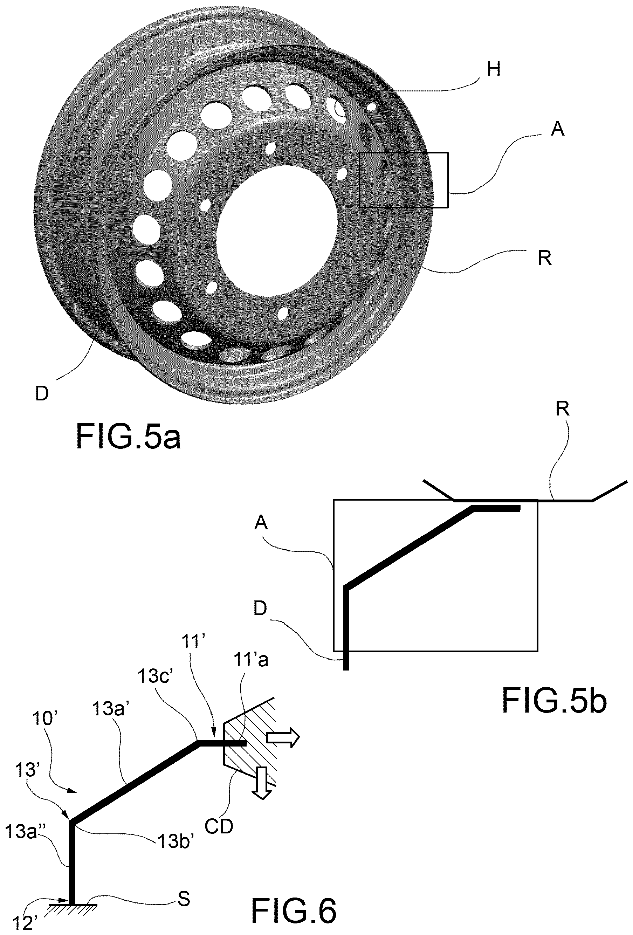

As can be appreciated, the present invention may be applied also to other kinds of road vehicle wheels, such as commercial vehicle wheels; in this respect, a common commercial vehicle wheel is shown in figures 5a and 5b, wherein the same reference numerals as figures 1a and 1b are used.

Figure 6 shows a specimen 10' which can be used in the method according to the invention, when applied to commercial vehicle wheels.

The specimen 10' consists of a strip of metal sheet, and comprises two end portions 11', 12' and an intermediate portion 13' interconnecting the end portions 11', 12'. The intermediate portion 13' has a curved shape to simulate a radial profile extract of a radially outer disk portion A of a wheel disk.

One of the end portions, 11', comprises a clamping region 11a', which is adapted to be held by a respective clamping device CD of a conventional test apparatus. The other end portion 12' is adapted to be fixed to a support S of the test apparatus. The test apparatus is adapted to apply a cyclic load (e.g. Deflection, Rotation, Force, Moment of Force.) to the end portion 11' of the specimen 10', said load being directed in a direction parallel to the longitudinal direction of the specimen 10' (horizontal arrow in Figure 6), but also lateral loads are possible (vertical arrow in Figure 6).

The intermediate portion 13' of the specimen 10' comprises a pair of flat or slightly curved flank segments 13a', 13a", one of which is inclined with respect to the end portion 11' adjoining thereto, the other being approximately aligned with the end portion 12' adjoining thereto, and an intermediate bend 13b' interconnecting the flank segments 13a'. The intermediate portion 13' further comprises an end bend 13c' connecting the inclined flank segment 13a' to the respective end portion 11' of the specimen 10'. Within the purpose of the present invention, the expression "slightly curved" is to be construed to mean that the flank segments 13a' may have a curvature, which is however smaller, particularly far smaller than the curvature of the bends 13b' and 13c'.

A hole can be formed through the inclined flank segment 13a', 13a". The purpose of this hole is to simulate the influence of vent holes of wheel disks on fatigue tests.

Additionally, the influence of different cut methods or edge quality on fatigue performance can also be investigated via trimming of the specimen edges or the hole.

Furthermore, the specimen according to the invention can include joints or seams, e.g. for testing of tailor welded blank materials, etc..

## Claims

1. A method for the mechanical characterization of a metallic material for wheel disk production, comprising
- providing a specimen (10) consisting of a strip of metal sheet and comprising two end portions (11) and an intermediate portion (13) interconnecting the end portions (11), wherein the intermediate portion (13) has a curved shape, and
- subjecting the specimen (10) to a mechanical fatigue test, wherein one of the end portions (11) is clamped to a load applying part (CD) of a test apparatus, and the other end portion (11) is clamped to another load applying part (CD) or fixed to a support part (S) of the test apparatus,
the method being **characterized in that** the intermediate portion (13) of the specimen (10) comprises a pair of flat or slightly curved flank segments (13a) inclined with respect to the end portions (11) of the specimen (10), an intermediate bend (13b) interconnecting the flank segments, as well as a pair of end bends (13c), each connecting the respective flank segment (13a) to the respective end portion (11) of the specimen (10),
wherein the intermediate portion simulates, or is constituted by, a radial profile extract of a radially outer disk portion (A) of a wheel disk.

2. A method for the mechanical characterization of a metallic material for wheel disk production, comprising
- providing a specimen (10') consisting of a strip of metal sheet and comprising two end portions (11', 12') and an intermediate portion (13') interconnecting the end portions (11', 12'), wherein the intermediate portion (13') has a curved shape, and
- subjecting the specimen (10') to a mechanical fatigue test, wherein one of the end portions (11') is clamped to a load applying part (CD) of a test apparatus, and the other end portion (12') is clamped to another load applying part (CD) or fixed to a support part (S) of the test apparatus,
the method being **characterized in that** the intermediate portion (13') of the specimen (10') comprises a pair of flat or slightly curved flank segments (13a', 13a"), one of which is inclined with respect to the end portion (11') adjoining thereto, the other being approximately aligned with the end portion (12') adjoining thereto, and an intermediate bend (13b') interconnecting the flank segments (13a', 13a"), as well as an end bend (13c') connecting the inclined flank segment (13a') to the respective end portion (11') of the specimen (10'),
wherein the intermediate portion (13') simulates, or is constituted by, a radial profile extract of a radially outer disk portion (A) of a wheel disk.

3. A method according to claim 1 or 2, wherein providing the specimen (10; 10') comprises
- providing a flat strip of metal sheet, and
- subjecting the strip to a forming operation.

4. A method according to claim 1 or 2, wherein providing the specimen (10; 10') comprises
- providing a wheel disk, and
- cutting the specimen out from the wheel disk.

5. A method according to any of claims 1, 2 or 3, further comprising
- subjecting the strip or the specimen to a cutting operation, to produce a hole (13d) through one of the flank segments.

6. A method according to any of the preceding claims, wherein the mechanical fatigue test comprises
- applying a cyclic load to at least one of the end portions (11; 11') of the specimen (10; 10'), said load being directed in a direction parallel to the longitudinal direction of the specimen (10; 10') and/or in a lateral direction.

## Patentansprüche

1. Verfahren zur mechanischen Charakterisierung eines metallischen Materials zur Radscheibenproduktion, mit
- Bereitstellen einer Probe (10), die aus einem Streifen eines Metallblechs besteht und zwei Endabschnitte (11) und einen Zwischenabschnitt (13), der die Endabschnitte (11) verbindet, aufweist, wobei der Zwischenabschnitt (13) eine gekrümmte Form aufweist, und
- Durchführen eines mechanischen Ermüdungstests an der Probe (10), wobei einer der Endabschnitte (11) an einen Lastanlegungsteil (CD) einer Testvorrichtung geklemmt ist und der andere Endabschnitt (11) an einen anderen Lastanlegungsteil (CD) geklemmt ist oder an einem Tragteil (S) der Testvorrichtung fixiert ist,
**dadurch gekennzeichnet, dass** der Zwischenabschnitt (13) der Probe (10) ein Paar von flachen oder leicht gekrümmten Flankensegmenten (13a), die bezüglich der Endabschnitte (11) der Probe (10) geneigt sind, eine Zwischenbiegung (13b), die die Flankensegmente verbindet, und ein Paar von Endbiegungen (13c), die das jeweilige Flankensegment (13a) mit dem jeweiligen Endabschnitt (11) der Probe (10) verbinden, aufweist,
wobei der Zwischenabschnitt einen Radialprofilausschnitt eines radial äußeren Scheibenabschnitts (A) einer Radscheibe simuliert oder bildet.

2. Verfahren zur mechanischen Charakterisierung eines metallischen Materials zur Radscheibenproduktion, mit
- Bereitstellen einer Probe (10'), die aus einem Streifen eines Metallblechs besteht und zwei Endabschnitte (11', 12') und einen Zwischenabschnitt (13'), der die Endabschnitte (11', 12') verbindet, aufweist, wobei der Zwischenabschnitt (13') eine gekrümmte Form aufweist, und
- Durchführen eines mechanischen Ermüdungstests an der Probe (10'), wobei einer der Endabschnitte (11') an einen Lastanlegungsteil (CD) einer Testvorrichtung geklemmt ist und der andere Endabschnitt (12') an einen anderen Lastanlegungsteil (CD) geklemmt ist oder an einem Tragteil (S) der Testvorrichtung fixiert ist,
**dadurch gekennzeichnet, dass** der Zwischenabschnitt (13') der Probe (10') ein Paar von flachen oder leicht gekrümmten Flankensegmenten (13a', 13a"), von denen eines bezüglich des Endabschnittes (11'), der daran angrenzt, geneigt ist, wobei das andere annähernd mit dem Endabschnitt (12'), der daran angrenzt, ausgerichtet ist, und eine Zwischenbiegung (13b'), die die Flankensegmente (13a', 13a") verbindet sowie eine Endbiegung (13c'), die das geneigte Flankensegment (13a') mit dem jeweiligen Endabschnitt (11') der Probe (10') verbindet, aufweist,
wobei der Zwischenabschnitt (13') einen Radialprofilausschnitt eines radial äußeren Scheibenabschnitts (A) einer Radscheibe simuliert oder bildet.

3. Verfahren nach Anspruch 1 oder 2, bei dem das Bereitstellen der Probe (10; 10') beinhaltet
- Bereitstellen eines flachen Streifens aus einem Metallblech und
- Formen des Streifens.

4. Verfahren nach Anspruch 1 oder 2, bei dem das Bereitstellen der Probe (10; 10') beinhaltet
- Bereitstellen einer Radscheibe und
- Ausschneiden der Probe aus der Radscheibe.

5. Verfahren nach einem der Ansprüche 1, 2 oder 3, ferner mit
- Schneiden des Streifens oder der Probe zum Erzeugen eines Lochs (13d) durch eines der Flankensegmente.

6. Verfahren nach einem der vorhergehenden Ansprüche, bei dem der mechanische Ermüdungstest beinhaltet
- Anlegen einer zyklischen Last an mindestens einen der Endabschnitte (11; 11') der Probe (10; 10'), wobei die Last in eine Richtung parallel zu der Längsrichtung der Probe (10; 10') und/oder in eine laterale Richtung gerichtet ist.

## Revendications

1. Procédé pour la caractérisation mécanique d'un matériau métallique pour la production d'un disque de roue, comprenant
- la fourniture d'un échantillon (10) constitué d'une bande de tôle métallique et comprenant deux portions terminales (11) et une portion intermédiaire (13) rejoignant les portions terminales (11), dans lequel la portion intermédiaire (13) a une forme incurvée, et
- le fait de soumettre l'échantillon (10) à un test de fatigue mécanique, dans lequel l'une des portions terminales (11) est serrée sur une partie d'application de charge (CD) d'un appareil de test, et l'autre portion terminale (11) est serrée sur une autre partie d'application de charge (CD) ou fixée à une partie de support (S) de l'appareil de test,
le procédé étant **caractérisé en ce que** la portion intermédiaire (13) de l'échantillon (10) comprend une paire de segments de flancs plats ou légèrement incurvés (13a) inclinés par rapport aux portions terminales (11) de l'échantillon (10), une courbure intermédiaire (13b) rejoignant les segments de flancs, ainsi qu'une paire de courbures terminales (13c), chacune reliant le segment de flanc respectif (13a) à la portion terminale respective (11) de l'échantillon (10),
dans lequel la portion intermédiaire simule, ou est constituée par, un extrait de profilé radial d'une portion de disque radialement externe (A) d'un disque de roue.

2. Procédé pour la caractérisation mécanique d'un matériau métallique pour la production d'un disque de roue, comprenant
- la fourniture d'un échantillon (10') constitué d'une bande de tôle métallique et comprenant deux portions terminales (11', 12') et une portion intermédiaire (13') rejoignant les portions terminales (11', 12'), dans lequel la portion intermédiaire (13') a une forme incurvée, et
- le fait de soumettre l'échantillon (10') à un test de fatigue mécanique, dans lequel l'une des portions terminales (11') est serrée sur une partie d'application de charge (CD) d'un appareil de test, et l'autre portion terminale (12') est serrée sur une autre partie d'application de charge (CD) ou fixée à une partie de support (S) de l'appareil de test,
le procédé étant **caractérisé en ce que** la portion intermédiaire (13') de l'échantillon (10') comprend une paire de segments de flancs plats ou légèrement incurvés (13a', 13a"), dont l'un est incliné par rapport à la portion terminale (11') adjacente à celui-ci, l'autre étant approximativement aligné sur la portion terminale (12') adjacente à celui-ci, et une courbure intermédiaire (13b') rejoignant les segments de flancs (13a', 13a"), ainsi qu'une courbure terminale (13c') reliant le segment de flanc incliné (13a') à la portion terminale respective (11') de l'échantillon (10'),
dans lequel la portion intermédiaire (13') simule, ou est constituée par, un extrait de profilé radial d'une portion de disque radialement externe (A) d'un disque de roue.

3. Procédé selon la revendication 1 ou 2, dans lequel la fourniture de l'échantillon (10 ; 10') comprend
- la fourniture d'une bande plate d'une tôle métallique, et
- le fait de soumettre la bande à une opération de formage.

4. Procédé selon la revendication 1 ou 2, dans lequel la fourniture de l'échantillon (10 ; 10') comprend
- la fourniture d'un disque de roue, et
- la découpe de l'échantillon dans le disque de roue.

5. Procédé selon l'une quelconque des revendications 1, 2 ou 3, comprenant en outre
- le fait de soumettre la bande ou l'échantillon à une opération de découpe, pour produire un trou (13d) à travers l'un des segments de flancs.

6. Procédé selon l'une quelconque des revendications précédentes, dans lequel le test de fatigue mécanique comprend
- l'application d'une charge cyclique sur au moins l'une des portions terminales (11 ; 11') de l'échantillon (10 ; 10'), ladite charge étant dirigée dans une direction parallèle à la direction longitudinale de l'échantillon (10 ; 10') et/ou dans une direction latérale.
